# EUROPEAN PATENT APPLICATION

(11) **EP 4 832 365 A1**
(43) Date of publication of application: **28.10.2026**
(21) Application number: 25747659.8
(22) Date of filing: 21.01.2025
(51) Int. Cl.: H04B 7/0417, H04B 7/0456

(54) **CHANNEL STATE INFORMATION DETERMINATION METHOD AND APPARATUS**

(30) Priority: 30.01.2024 CN 202410137350
(71) Applicant: Huawei Technologies Co., Ltd., Shenzhen, Guangdong 518129 (CN)
(72) Inventor: XIAO, Chaokun, Shenzhen, Guangdong 518129 (CN); QIN, Qibo, Shenzhen, Guangdong 518129 (CN); CHEN, Shujing, Shenzhen, Guangdong 518129 (CN); WANG, Xiaohan, Shenzhen, Guangdong 518129 (CN); ZHOU, Guohua, Shenzhen, Guangdong 518129 (CN)
(74) Representative: Grünecker Patent- und Rechtsanwälte PartG mbB
(86) International application number: PCT/CN2025/073722
(87) International publication number: WO 2025/162087

(57) **Abstract**

A channel state information determining method and an apparatus are provided. According to the method, a network device determines, based on mobility state information of a terminal device and a channel knowledge map, N rows of basis vectors corresponding to N time units, where each row of the N rows of basis vectors includes X basis vectors, and the channel knowledge map indicates a region-based channel feature. The network device sends first indication information, where the first indication information indicates the N rows of basis vectors. The network device respectively sends pilot signals in the N time units. The network device receives second indication information, where the second indication information indicates weighting coefficients of Y basis vectors in the X basis vectors, and the weighting coefficients of the Y basis vectors are determined based on the pilot signals. The network device determines, based on the weighting coefficients of the Y basis vectors and the N rows of basis vectors, channel state information corresponding to M time units, where the M time units include the N time units. The method can improve accuracy of the channel state information.

## Description

This application claims priority to Chinese Patent Application No. 202410137350.6, filed with the China National Intellectual Property Administration on January 30, 2024 and entitled "CHANNEL STATE INFORMATION DETERMINING METHOD AND APPARATUS", which is incorporated herein by reference in its entirety.

### TECHNICAL FIELD

This application relates to the field of communication technologies, and in particular, to a channel state information determining method and an apparatus.

### BACKGROUND

In a massive multiple-input multiple-output (massive multiple-input multiple-output, Massive MIMO) technology, a network device determines, based on channel state information (channel state information, CSI) fed back by a terminal device, precoding used for sending data to the terminal device.

The network device uses CSI latest reported by the terminal device as CSI used for determining the precoding in an entire CSI reporting periodicity. However, a current actual channel may be different from a channel used by the terminal device to feed back CSI. Consequently, precoding determined by the network device by using the CSI fed back by the terminal device does not match the current actual channel, affecting transmission performance.

### SUMMARY

Embodiments of this application provide a channel state information determining method and an apparatus, to improve accuracy of channel state information.

According to a first aspect, an embodiment of this application provides a communication method. The method may be performed by a network device. The network device herein may be the network device, or may be a processor, a module, a chip, a chip system, or the like that is in the network device and that implements the method. According to the method, the network device determines, based on mobility state information of a terminal device and a channel knowledge map, N rows of basis vectors corresponding to N time units, where each row of the N rows of basis vectors includes X basis vectors, and the channel knowledge map indicates a region-based channel feature. The network device sends first indication information, where the first indication information indicates the N rows of basis vectors. The network device respectively sends pilot signals in the N time units. The network device receives second indication information, where the second indication information indicates weighting coefficients of Y basis vectors in the X basis vectors, and the weighting coefficients of the Y basis vectors are determined based on the pilot signals. The network device determines, based on the weighting coefficients of the Y basis vectors and the N rows of basis vectors, channel state information corresponding to M time units, where the M time units include the N time units. N is a positive integer, M is an integer greater than N, X is an integer greater than 1, and Y is an integer greater than 1 and less than or equal to X.

It can be learned that in this embodiment of this application, the N rows of basis vectors corresponding to the N time units are determined by the network device based on the mobility state information of the terminal device and the channel knowledge map, thereby allowing the N rows of basis vectors to represent channel time variation during movement of the terminal device. Accordingly, the network device determines, based on the N rows of basis vectors and the weighting coefficients of the Y basis vectors fed back by the terminal device in the N time units, the channel state information corresponding to the M time units, which can improve accuracy of the channel state information, thereby improving transmission performance.

In addition, a manner in which the network device determines, based on measurement feedback of the terminal device in the N time units in the M time units, the channel state information corresponding to the M time units can reduce signaling overheads.

In an optional implementation, that the network device determines, based on the weighting coefficients of the Y basis vectors and the N rows of basis vectors, the channel state information corresponding to the M time units includes: The network device determines, based on the weighting coefficients of the Y basis vectors and M rows of basis vectors, the channel state information corresponding to the M time units, where the M rows of basis vectors are determined by the network device based on the mobility state information of the terminal device and the channel knowledge map, and are basis vectors corresponding to the M time units.

In an optional implementation, the basis vector is a time-frequency-space basis vector. The time-frequency-space basis vector includes a time-domain basis vector, a frequency-domain basis vector, and a space-domain basis vector, or the time-frequency-space basis vector is a basis vector jointly defined in time domain, frequency domain, and space domain.

In another optional implementation, the basis vector is a Doppler basis vector. The Doppler basis vector is a basis vector obtained by projecting space-frequency coefficients onto a Doppler domain, and the space-frequency coefficients are determined based on a channel feature and a space-frequency basis vector.

In an optional implementation, when the basis vector is the Doppler basis vector, the weighting coefficients of the Y basis vectors are weighting coefficients obtained by projecting weighting coefficients of space-frequency basis vectors onto Doppler basis vectors.

In an optional implementation, the second indication information includes indexes of the Y basis vectors and the weighting coefficients of the Y basis vectors. In this manner, the network device may determine the Y basis vectors in the X basis vectors based on the indexes of the Y basis vectors, to determine weighting coefficients included in the second indication information as the weighting coefficients of the Y basis vectors.

In another optional implementation, the second indication information includes the weighting coefficients of the Y basis vectors and indexes of the weighting coefficients of the Y basis vectors. In this manner, the network device may determine the Y basis vectors in the X basis vectors based on the indexes of the weighting coefficients of the Y basis vectors, to determine Y weighting coefficients included in the second indication information as the weighting coefficients of the Y basis vectors.

In an optional implementation, the weighting coefficients of the Y basis vectors are Y weighting coefficients with largest values in weighting coefficients of the X basis vectors, thereby helping improve accuracy of the channel state information.

In an optional implementation, Y is configured by the network device, or is pre-negotiated between the network device and the terminal device.

In an optional implementation, before the network device determines, based on the mobility state information of the terminal device and the channel knowledge map, the N rows of basis vectors corresponding to the N time units, the network device further receives the mobility state information of the terminal device, where the mobility state information includes one or more of the following: a moving speed, a moving direction, and position region information. In this manner, the network device may obtain the mobility state information of the terminal device.

According to a second aspect, an embodiment of this application further provides a communication apparatus. The communication apparatus has a part or all of functions of implementing the network device according to the first aspect. For example, functions of the communication apparatus may include functions in a part or all of embodiments of the network device according to the first aspect of embodiments of this application, or may include a function of separately implementing any embodiments of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are essential for the communication apparatus.

In an implementation, the communication apparatus includes a processing unit and a communication unit.

The processing unit is configured to determine, based on mobility state information of a terminal device and a channel knowledge map, N rows of basis vectors corresponding to N time units, where each row of the N rows of basis vectors includes X basis vectors, and the channel knowledge map indicates a region-based channel feature.

The communication unit is configured to send first indication information, where the first indication information indicates the N rows of basis vectors.

The communication unit is further configured to respectively send pilot signals in the N time units.

The communication unit is further configured to receive second indication information, where the second indication information indicates weighting coefficients of Y basis vectors in the X basis vectors, and the weighting coefficients of the Y basis vectors are determined based on the pilot signals.

The processing unit is further configured to determine, based on the weighting coefficients of the Y basis vectors and the N rows of basis vectors, channel state information corresponding to M time units, where the M time units include the N time units.

N is a positive integer, M is an integer greater than N, X is an integer greater than 1, and Y is an integer greater than 1 and less than or equal to X.

In addition, for another optional implementation of the communication apparatus in this aspect, refer to related content of the first aspect. Details are not described herein again.

In an example, the communication unit may be a transceiver or a communication interface, the storage unit may be a memory, and the processing unit may be a processor.

In an implementation, the communication apparatus includes a processor and a transceiver.

The processor is configured to determine, based on mobility state information of a terminal device and a channel knowledge map, N rows of basis vectors corresponding to N time units, where each row of the N rows of basis vectors includes X basis vectors, and the channel knowledge map indicates a region-based channel feature.

The transceiver is configured to send first indication information, where the first indication information indicates the N rows of basis vectors.

The transceiver is further configured to respectively send pilot signals in the N time units.

The transceiver is further configured to receive second indication information, where the second indication information indicates weighting coefficients of Y basis vectors in the X basis vectors, and the weighting coefficients of the Y basis vectors are determined based on the pilot signal.

The processor is further configured to determine, based on the weighting coefficients of the Y basis vectors and the N rows of basis vectors, channel state information corresponding to M time units, where the M time units include the N time units.

N is a positive integer, M is an integer greater than N, X is an integer greater than 1, and Y is an integer greater than 1 and less than or equal to X.

In addition, for another optional implementation of the communication apparatus in this aspect, refer to related content of the first aspect. Details are not described herein again.

In another implementation, the communication apparatus is a chip or a chip system. The processing unit may alternatively be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least a part or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system on a chip (system on a chip, SoC). Whether the components are separately disposed on different chips or integrated and disposed on one or more chips usually depends on a requirement of a product design. Implementation forms of the foregoing components are not limited in embodiments of this application.

According to a third aspect, an embodiment of this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the foregoing input information, the transceiver receives the information, and inputs the information into the processor. Further, after the transceiver receives the information, other processing may need to be performed before the information is input into the processor.

Unless otherwise specified, operations such as sending and receiving related to the processor may be more generally understood as operations such as output, receiving, and input of the processor, not sending and receiving operations directly performed by a radio frequency circuit and an antenna, if the operations do not conflict with actual functions or internal logic of the operations in related descriptions.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner in which the memory and the processor are disposed are not limited in embodiments of this application.

According to a fourth aspect, an embodiment of this application further provides a communication system. The system includes a terminal device and a network device. In another possible design, the system may further include another device/function network element that interacts with the terminal device and/or the network device.

According to a fifth aspect, an embodiment of this application provides a computer-readable storage medium, configured to store instructions. When the instructions are run by a computer, the method according to the first aspect is implemented.

According to a sixth aspect, an embodiment of this application further provides a computer program product including instructions. When the computer program product runs on a computer, the method according to the first aspect is implemented.

According to a seventh aspect, an embodiment of this application provides a chip system. The chip system includes a processor and an interface. The interface is configured to obtain a program or instructions, and the processor is configured to invoke the program or the instructions to implement or support a network device in implementing functions in the first aspect, for example, determining or processing at least one of data and information in the foregoing method. In a possible design, the chip system further includes a memory. The memory is configured to store program instructions and data that are essential for a terminal. The chip system may include a chip, or may include a chip and another discrete component.

According to an eighth aspect, an embodiment of this application provides a communication apparatus including a processor, configured to execute a computer program or executable instructions stored in a memory. When the computer program or the executable instructions are executed, the apparatus is caused to perform the method according to the possible implementations of the first aspect.

In a possible implementation, the processor and the memory are integrated together.

In another possible implementation, the memory is located outside the communication apparatus.

For beneficial effects of the second aspect to the eighth aspect, refer to beneficial effects of the first aspect. Details are not described herein again.

### BRIEF DESCRIPTION OF DRAWINGS

FIG. 1 is a diagram of a system architecture;
FIG. 2 is a diagram of structures of a network device and a terminal device;
FIG. 3 is a diagram of a channel knowledge map;
FIG. 4 is a diagram of three dimensions: a space domain, a time domain, and a frequency domain;
FIG. 5 is an interaction diagram of obtaining CSI by a network device and a terminal device;
FIG. 6 is a diagram of a multi-user movement scenario;
FIG. 7 is a diagram of CSI measurement and feedback;
FIG. 8 is a diagram of CSI comparison in a time-varying scenario;
FIG. 9 is a diagram of an abrupt multipath change in time domain;
FIG. 10 is an interaction diagram of a channel state information determining method according to an embodiment of this application;
FIG. 11 is a diagram of terminal device movement according to an embodiment of this application;
FIG. 12 is a diagram of basis vectors according to an embodiment of this application;
FIG. 13 is a diagram for determining CSI according to an embodiment of this application;
FIG. 14 is another diagram for determining CSI according to an embodiment of this application;
FIG. 15 is a diagram of a structure of a communication apparatus according to an embodiment of this application; and
FIG. 16 is a diagram of a structure of another communication apparatus according to an embodiment of this application.

### DESCRIPTION OF EMBODIMENTS

To better understand embodiments of this application, the following first describes a system architecture included in embodiments of this application.

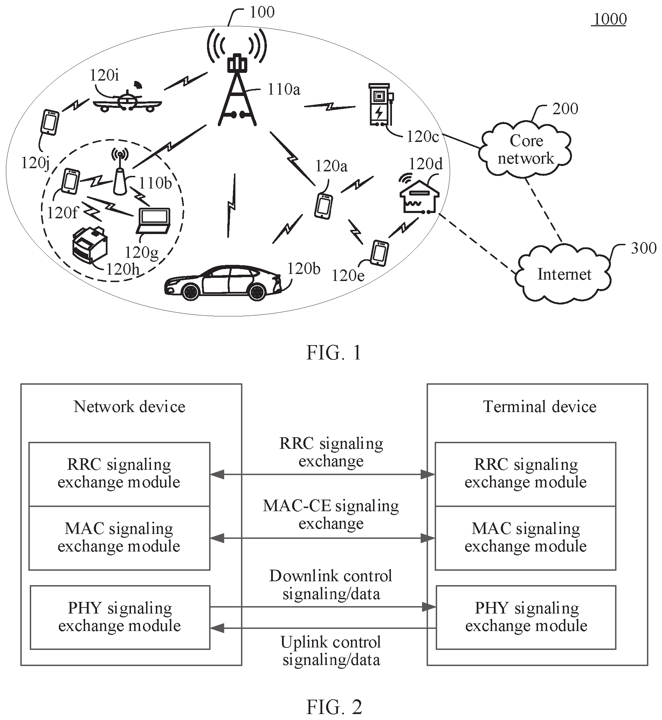

FIG. 1 is a diagram of an architecture of a communication system 1000 according to an embodiment of this application. As shown in FIG. 1, the communication system 1000 includes a radio access network (radio access network, RAN) 100. The RAN 100 includes at least one RAN node (for example, 110a and 110b in FIG. 1, collectively referred to as 110), and may further include at least one terminal device (for example, 120a to 120j in FIG. 1, collectively referred to as 120). The RAN 100 may further include another RAN node, for example, a wireless relay device and/or a wireless backhaul device (not shown in FIG. 1). The terminal device 120 is connected to the RAN node 110 in a wireless manner. Terminal devices may be connected to each other in a wired or wireless manner, and RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different physical devices that are independent of each other, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may further include the foregoing two or more different radio access systems. The RAN 100 may alternatively be an open RAN (open RAN, O-RAN).

The RAN node also referred to as a radio access network device, a RAN entity, or an access node, to help a terminal device access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), or a radio unit (radio unit, RU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all functions of a physical layer. For detailed descriptions of the foregoing protocol layers, refer to related technical specifications in the 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in radio frequency equipment, for example, included in a remote radio unit (remote radio unit, RRU) or an active antenna unit (active antenna unit, AAU). The CU may be further divided into two types of RAN nodes at a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses an example in which the base station is used as the RAN node for description.

The terminal device is a device with a wireless transceiver function, and may send a signal to the base station, or receive a signal from the base station. The terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In embodiments of this application, the network device (for example) may be the RAN node described above.

FIG. 2 is a diagram of structures of a network device and a terminal device. As shown in FIG. 2, both the network device and the terminal device include a radio resource control (radio resource control, RRC) signaling exchange module, a medium access control (medium access control, MAC) signaling exchange module, and a physical (physical, PHY) signaling exchange module. The RRC signaling exchange module is configured to send and receive RRC signaling between the network device and the terminal device. The MAC signaling exchange module is configured to send and receive media access control-control element (media access control-control element, MAC-CE) signaling between the network device and the terminal device. The PHY signaling exchange module is configured to send and receive uplink/downlink control signaling and uplink/downlink data between the network device and the terminal device. The uplink control signaling is, for example, a physical uplink control channel. The uplink data is, for example, a physical uplink shared channel. The downlink control signaling is, for example, a physical downlink control channel. The downlink data is, for example, a physical downlink shared channel.

The following describes related concepts in embodiments of this application.

### 1. Channel information and channel knowledge map

The channel information may be used to represent a channel feature or characteristic. For example, the channel information may be channel matrix information, CSI, and/or a channel feature vector. Alternatively, the channel information may be a CSI report. Alternatively, the channel information may be time domain information, frequency domain information, space domain information, time-frequency domain information, space-frequency domain information, delay-Doppler (delay-Doppler) domain information, time-frequency-space domain information, or the like of a channel. This is not specifically limited herein.

The CSI may be used to describe information related to channel quality. For example, the CSI describes a propagation process of a radio signal between a transmitter and a receiver, including impact of distances, scattering, fading, and the like on the signal. For downlink transmission, the CSI may be used by a terminal device to feed back downlink channel quality to a network device, so that the network device performs downlink transmission based on the CSI. The CSI sent by the terminal device to the network device may be carried in the CSI report. For example, the CSI may also include at least one of the following: a channel state information-reference signal resource indicator (channel state information-reference signal resource indicator, CRI), a rank indicator (rank indicator, RI), a channel quality indicator (channel quality indicator, CQI), a precoding matrix indicator (precoding matrix indicator, PMI), a layer indicator (layer indicator, LI), a layer 1-reference signal received power (layer 1-reference signal received power, L1-RSRP), a layer 1-signal to interference plus noise ratio (layer 1-signal to interference plus noise ratio, L1-SINR), a capability index (capability index), a time-domain channel property (time-domain channel property, TDCP), and the like.

The terminal device may perform channel measurement by using a downlink reference signal to obtain channel information. The measurement may also be described as evaluation, detection, estimation, or the like. The downlink reference signal may include but is not limited to a channel state information-reference signal (channel state information-reference signal, CSI-RS), a synchronization signal and physical broadcast channel block (synchronization signal block, SSB), a physical broadcast channel demodulation reference signal (physical broadcast channel demodulation reference signal, PBCH DMRS), or the like. For example, the terminal device may perform downlink channel measurement based on the CSI-RS, to obtain CSI.

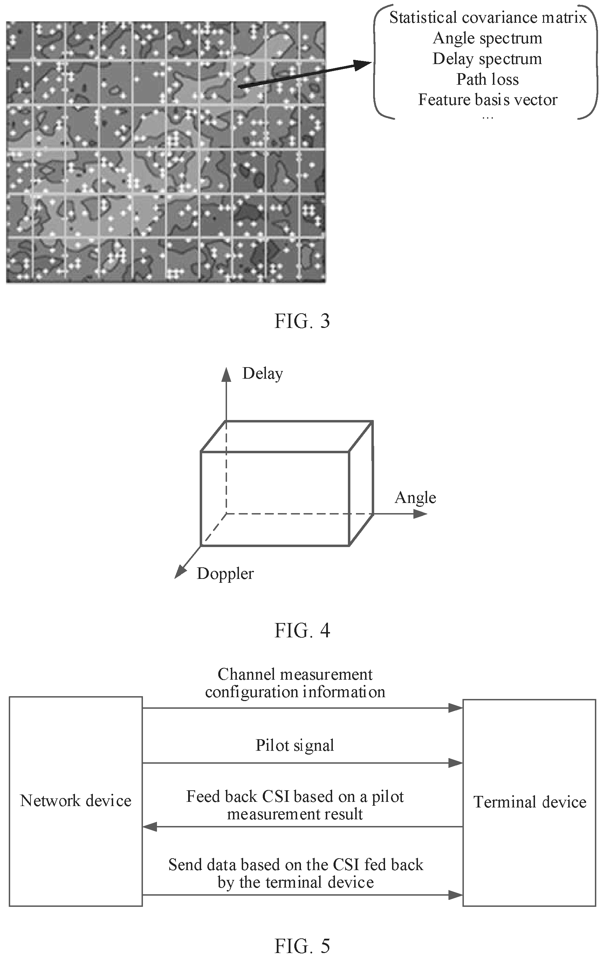

The channel knowledge map may be understood as a database, and is configured to store/indicate a region-based channel feature. The channel feature includes a channel statistical covariance matrix, an angle spectrum, a delay spectrum, a path loss, a feature basis vector, and the like. The channel knowledge map may be determined and managed in advance by a core network device, an access network device, or another entity based on channel features of a large quantity of positions. For example, FIG. 3 is a diagram of a channel knowledge map. As shown in FIG. 3, the channel knowledge map may divide a physical cell into two-dimensional grid points, and each two-dimensional grid point stores several channel features of a position region in the form of a matrix, a vector, or a scalar.

### 2. Variation characteristics of a channel

The variation characteristics of the channel include a variation characteristic in space domain, a variation characteristic in frequency domain, and a characteristic feature in time domain. A physical parameter corresponding to the variation characteristic of the channel in space domain is an angle, a physical parameter corresponding to the variation characteristic of the channel in frequency domain is a multipath delay, and a physical parameter corresponding to the variation characteristic of the channel in time domain is a Doppler frequency shift. A terminal device may perform compression and feedback on the channel by using an angle, the multipath delay, and Doppler frequency shift of a limited transmission path, so that a network device obtains the variation characteristics of the channel.

In addition, if a time-domain channel is projected onto a Doppler domain, a variation trend of the channel may be equivalently described by using a characteristic of the channel in Doppler domain. Therefore, a Doppler characteristic may describe a time-varying characteristic of the channel. Doppler information of a time-varying channel varies much more slowly than time domain information, and the network device may reconstruct the time-varying characteristic of the channel based on the Doppler information.

In conclusion, the channel may be represented from three dimensions: the Doppler domain, the angle, and the delay. For example, FIG. 4 is a diagram of three dimensions: a space domain, a time domain, and a frequency domain. An angle, a Doppler domain, and a delay shown in FIG. 4 respectively represent three dimensions of a channel: a space domain, a time domain, and a frequency domain. Further, a plurality of space-frequency matrices in time may be integrated into one three-dimensional matrix in space domain, time domain, and frequency domain.

In a 5G communication system, a massive MIMO technology plays a critical role in improving spectral efficiency of the system. In the massive MIMO technology, a network device sends downlink data based on CSI fed back by a terminal device. Therefore, accuracy of the CSI plays a critical role in improving system performance.

FIG. 5 is an interaction diagram of obtaining CSI by a network device and a terminal device. As shown in FIG. 5, the network device sends channel measurement configuration information to the terminal device, to notify the terminal device of time and a behavior of performing channel measurement. The network device sends a pilot signal to the terminal device, where the pilot signal is used to measure a channel. The terminal device feeds back CSI to the network device based on a pilot measurement result. The network device sends data based on the CSI fed back by the terminal device. The terminal device may feed back the CSI by using a type II codebook, and the fed-back CSI includes parameters such as an RI, a CQI, and a PMI. In the type II codebook, weighted superposition is performed by using a plurality of discrete Fourier transform (discrete Fourier transform, DFT) beams, to represent a channel direction. That the network device sends the data based on the CSI fed back by the terminal device includes: The network device determines, based on the RI fed back by the terminal device, a quantity of data streams transmitted to the terminal device. The network device determines, based on the CQI fed back by the terminal device, a modulation order and a code rate of channel coding for transmitting the data to the terminal device. The network device determines, based on the PMI fed back by the terminal device, a precoding matrix for transmitting the data to the terminal device.

A PMI feedback mechanism may be a mechanism based on specific codebook selection and reporting. To be specific, an information bit reported by the terminal device indicates a position of a codeword selected by the terminal device in an overall codebook set. Therefore, the network device determines, based on a known overall codebook and a codebook position fed back by the terminal device, a PMI used for downlink data transmission.

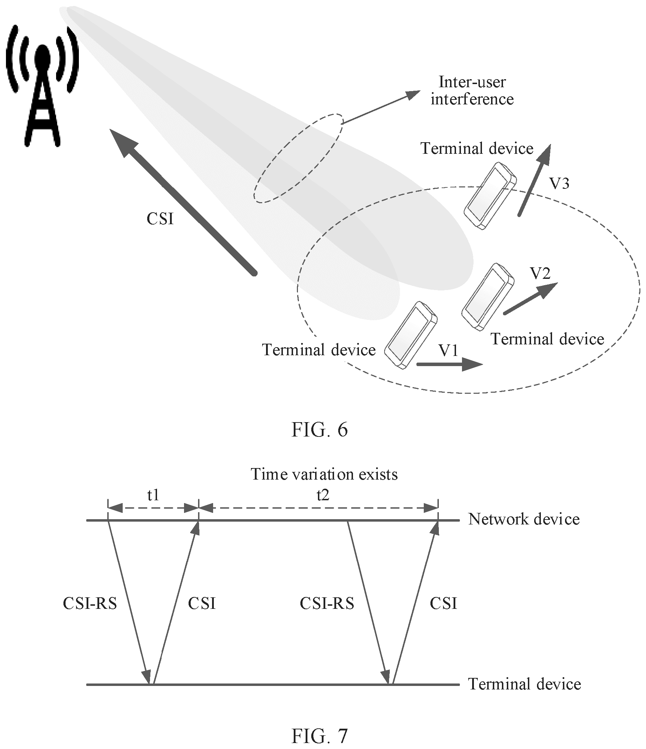

However, the CSI fed back by the terminal device usually involves a delay, which causes the CSI obtained by the network device to be outdated, affecting data transmission performance. This problem is especially apparent in a scenario with a time-varying channel, and a multi-user movement scenario is one of key scenarios in 5G. FIG. 6 is a diagram of a multi-user movement scenario. As shown in FIG. 6, a terminal device 1, a terminal device 2, and a terminal device 3 respectively move at a speed V1, a speed V2, and a speed V3 towards corresponding arrow directions. In the multi-user movement scenario shown in FIG. 6, outdated CSI of a plurality of terminal devices causes multi-user precoding to fail to match a real channel condition. Consequently, significant inter-user interference is introduced and significant system performance degradation is caused.

For example, FIG. 7 is a diagram of CSI measurement and feedback. As shown in FIG. 7, in a time period of t1, a network device sends a CSI-RS to a terminal. The terminal device performs channel estimation based on the received CSI-RS to obtain CSI, and feeds back the CSI to the network device through an uplink. In addition, before the terminal device reports CSI next time, the network device sends downlink data by using CSI latest reported by the terminal device. In other words, in a time period of t2, the network device sends the downlink data by using the CSI reported by the terminal device in the time period of t1.

For a CSI feedback procedure shown in FIG. 7, delays causing the CSI to be outdated include a CSI validity delay t1 and a channel time-varying delay t2. As shown in FIG. 7, t1 is a time period during which the following steps are sequentially performed: The network device sends the CSI-RS; the terminal device receives the CSI-RS, and performs channel estimation; the terminal device quantizes and feeds back an estimated channel; the network device receives uplink CSI feedback from the terminal device; the network device calculates a precoding matrix based on the CSI fed back by the terminal device and uses the precoding matrix for downlink data transmission. Existence of t1 causes a delay between a channel H1 used by the network device to deliver the CSI-RS and H2 determined by the network device based on the CSI reported by the terminal device. In other words, there is a delay between the reported CSI and CSI of a current actual channel. In a stationary scenario, t1 has a minor impact on system performance. However, when a channel varies rapidly with time, t1 causes significant degradation in system performance. In addition, t1 is determined by hardware capabilities of the network device and the terminal device, and cannot be mitigated through a configuration of the network device.

In addition, the CSI is fixed in the time period of t2, in other words, the network device assumes that the channel is unchanged in a CSI feedback periodicity. However, when a channel varies with time, for example, in a movement scenario, the channel also varies drastically in the time period of t2, and therefore the channel time-varying delay t2 exists. Consequently, the precoding matrix calculated by the network device based on the CSI reported in the time period of t1 does not match an actual channel, causing performance degradation. Duration of t2 may be usually configured by the network device, but a shorter CSI feedback periodicity causes an increase in CSI feedback overheads.

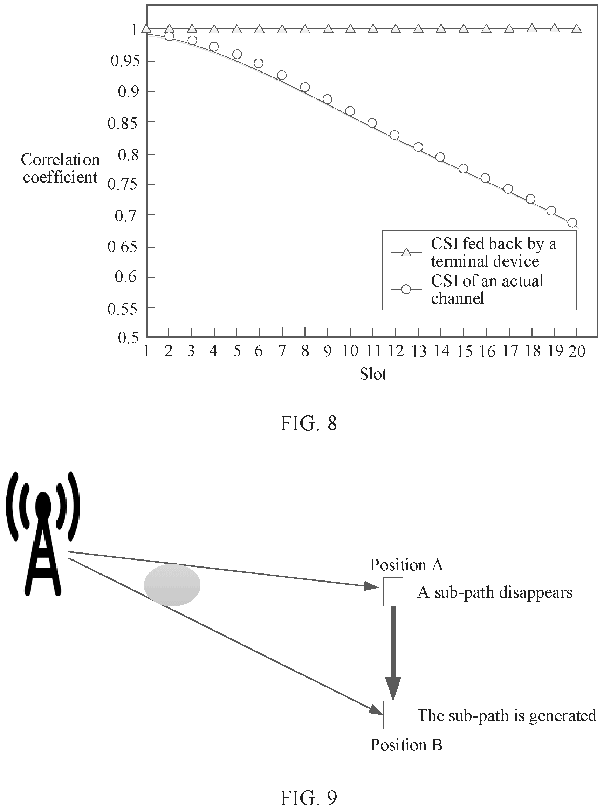

For example, FIG. 8 is a diagram of CSI comparison in a time-varying scenario. Specifically, FIG. 8 is obtained in a scenario in which a channel varies with time at a speed of 30 km/h. As shown in FIG. 8, as time changes, correlation between CSI fed back by a terminal device and CSI of an actual channel has an apparent decrease trend. In this case, if a network device uses, for a long time in a future period of time, CSI latest fed back by the terminal device for data transmission, system performance degradation may be caused.

In another implementation, the network device may further determine future CSI based on an autoregressive model (autoregressive model, AR) and historical channel information, in other words, the network device determines the CSI in a future period of time based on the CSI historically reported by the terminal device and the AR. The AR model may be, for example, $h \left(n+1\right) = h \left(n\right) {w}_{1} + h \left(n-1\right) {w}_{2} + h \left(n-2\right) {w}_{3}$ (1).

*h(n)* represents channel information at a current moment, *h(n* - 1) and *h(n* - 2) represent channel information at two moments before the current moment, *h(n* + 1) represents channel information at a moment following the current moment, and *w*₁, *w*₂, and *w*₃ represent different weighting coefficients.

However, during movement of the terminal device, a channel may undergo an abrupt multipath change in time domain. For example, FIG. 9 is a diagram of an abrupt multipath change in time domain. As shown in FIG. 9, when a terminal device is at a position A, a sub-path disappears, in other words, there is no time-domain sub-path at the position A; and when the terminal device is at a position B, the sub-path is generated, in other words, there is a time-domain sub-path at the position B. A Doppler phenomenon and an abrupt multipath change over time affect CSI prediction performance. In a manner in which a network device determines future CSI based on historical channel information and an AR, the network device cannot obtain future abrupt change information, and consequently, a determined channel does not match an actual channel, causing performance degradation.

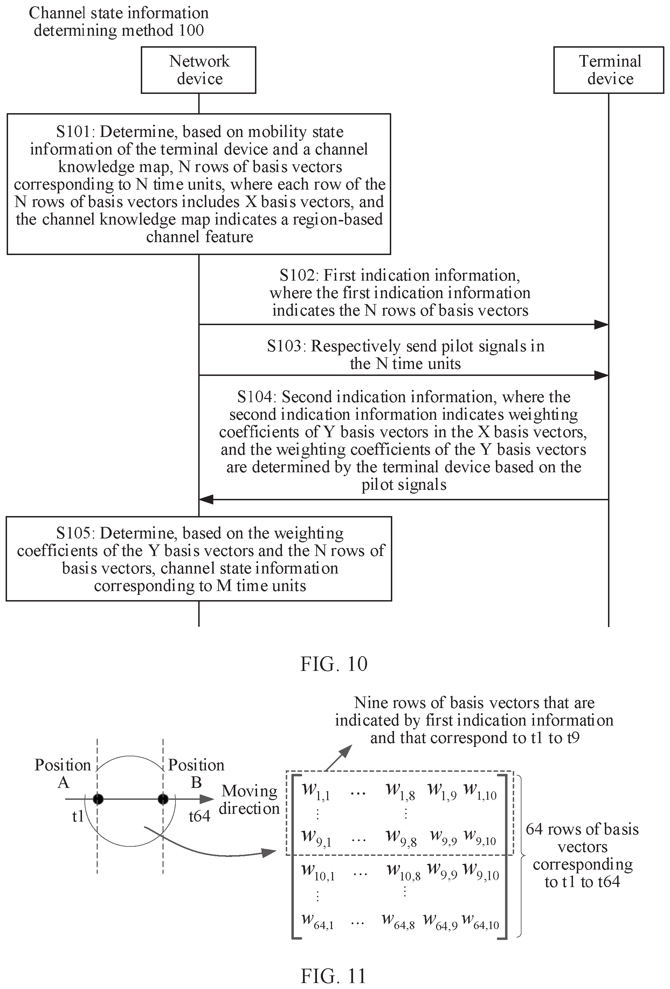

An embodiment of this application provides a channel state information determining method 100. FIG. 10 is an interaction diagram of the channel state information determining method 100. The channel state information determining method 100 is described from a perspective of interaction between a network device and a terminal device. The channel state information determining method 100 includes but is not limited to the following steps.

S101: The network device determines, based on mobility state information of the terminal device and a channel knowledge map, N rows of basis vectors corresponding to N time units, where each row of the N rows of basis vectors includes X basis vectors, and the channel knowledge map indicates a region-based channel feature.

The channel knowledge map includes channel information of a region in which the terminal device is located, for example, includes a full-dimensional channel feature basis vector of the region in which the terminal device is located. N is a positive integer, and X is an integer greater than 1.

In an optional implementation, the mobility state information of the terminal device includes one or more of the following: a moving speed, a moving direction, and position region information. The moving speed of the terminal device includes at least one of the following: an absolute speed based on a geographical position, and a speed relative to the network device or another reference object. The moving direction of the terminal device includes whether the terminal device moves along a straight line in a direction, an angle of movement relative to a specific coordinate axis, and the like. The position region information of the terminal device is position information of the terminal device at a time point. For example, the position region information of the terminal device may be an x coordinate, a y coordinate, and a z coordinate of the terminal device at a time point. For another example, the position region information of the terminal device may be global positioning system (global positioning system, GPS) position information of the terminal device at a time point.

In an optional implementation, before determining, based on the mobility state information of the terminal device and the channel knowledge map, the N rows of basis vectors corresponding to the N time units, the network device further receives the mobility state information of the terminal device. In other words, the terminal device may report the mobility state information of the terminal device to the network device. The terminal device may actively report the mobility state information of the terminal device to the network device. Alternatively, the network device requests, by using request information, to obtain the mobility state information of the terminal device from the terminal device. After receiving the request information from the network device, the terminal device reports the mobility state information of the terminal device to the network device.

Optionally, a manner in which the terminal device reports the moving speed to the network device may be directly reporting a value of the moving speed, for example, reporting a moving speed of 10 km/h or 200 m/s of the terminal device to the network device. Optionally, a manner in which the terminal device reports the moving speed may alternatively be reporting an index (index) of the moving speed from a predefined candidate speed set, where the candidate speed set includes a plurality of values of candidate speeds. For example, the candidate speed set includes 30 km/h, 60 km/h, 120 km/h, and 150 km/h. The terminal device selects, based on the moving speed of the terminal device, a closest speed value from the candidate set for reporting. For example, if the moving speed of the terminal device is 56 km/h, the terminal device reports, to the network device, an index corresponding to 60 km/h. The manner in which the terminal device reports the moving speed by reporting a speed index can reduce signaling overheads.

That the terminal device reports the moving direction may be that the terminal device reports an angle between the moving direction and a standard coordinate system, longitude and latitude, or the like. Optionally, that the terminal device reports the moving direction may be that the terminal device reports a relative direction with respect to a geographical position of the network device, for example, a relative angle between the moving direction and a direction from the terminal device to the geographical position of the network device or longitude and latitude. That the terminal device reports the position region information may be that the terminal device reports position coordinates at a time point during future movement of the terminal device, or the like.

Optionally, the terminal device may further report the moving speed, the moving direction, and the position region information in another implementation. This is not limited in embodiments of this application.

Optionally, the network device may independently determine the mobility state information of the terminal device. For example, the network device determines mobility state information of the terminal device in a future period of time based on a historical motion trajectory of the terminal device.

In addition, the N time units are a part of time units during movement of the terminal device. All time units during the movement of the terminal device may be determined by the network device based on the mobility state information of the terminal device, or may be pre-negotiated between the network device and the terminal device. For example, if the network device determines, based on the mobility state information of the terminal device, that all the time units during the movement of the terminal device include 10 time units, the N time units may be a part of the 10 time units. An interval between every two adjacent time units in the N time units may be a plurality of slots (slot), *x* seconds (s), *x* milliseconds (ms), or the like, where *x* is a real number greater than 0. For example, the interval between every two adjacent time units in the N time units is five slots, 5s, or 10 ms.

In an optional implementation, that the network device determines, based on the mobility state information of the terminal device and the channel knowledge map, the N rows of basis vectors corresponding to the N time units may be: The network device determines, based on the mobility state information of the terminal device and the channel knowledge map, one row of basis vectors corresponding to each of the N time units. For example, if the N time units are five slots, the network device determines, based on the mobility state information of the terminal device and the channel knowledge map, one row of basis vectors corresponding to each of the five slots. In other words, five rows of basis vectors determined by the network device are in one-to-one correspondence with the five slots.

A feature of the channel knowledge map indicates that the channel knowledge map can provide a plurality of basis vectors that are in each of a plurality of position regions. In this case, the N rows of basis vectors that correspond to the N time units and that are determined by the network device based on the mobility state information of the terminal device and the channel knowledge map may represent channel time variation during movement of the terminal device. In other words, one row of basis vectors corresponding to an *n*^{th} time unit in the N time units may represent channel time-varying information in the *n*^{th} time unit, where *n* is a positive integer less than or equal to N. Each row of the N rows of basis vectors includes X basis vectors, indicating that each of the N time units corresponds to X basis vectors. In this case, each of the N time units has X basis vectors used to represent channel time variation of the time unit.

It can be learned that in a manner of determining, based on the mobility state information of the terminal device and the channel knowledge map, the N rows of basis vectors corresponding to the N time units of the terminal device, the network device may determine channel time variation of each of the N time units.

In an optional implementation, the basis vector is a time-frequency-space basis vector. The time-frequency-space basis vector includes a time-domain basis vector, a frequency-domain basis vector, and a space-domain basis vector, or the time-frequency-space basis vector is a basis vector jointly defined in time domain, frequency domain, and space domain.

For example, channel information H and the basis vector satisfy Formula (2): ${H}^{N \times 1} = {\sum }_{m = 0}^{M - 1} {α}_{m} {U}^{N \times 1}$ (2).

*U*^{N×1} represents a time-frequency-space basis vector, where ${U}^{N \times 1} = {S}_{s}^{{N}_{s} \times 1} ⊗ {F}^{{N}_{f} \times 1} ⊗ {T}^{{N}_{t} \times 1}$ . *αₘ* represents a weighting coefficient of the time-frequency-space basis vector and is a complex number. N and M are both integers greater than 0, and m is an integer greater than 0 and less than M. ${S}_{s}^{{N}_{s} \times 1}$, *F*^{*N^{f}*×1}, and *T*^{*N^{t}*×1} represent a space-domain basis vector, a frequency-domain basis vector, and a time-domain basis vector respectively. *Nₛ, N_{f},* and *Nₜ* represent lengths of the space-domain basis vector, the frequency-domain basis vector, and the time-domain basis vector respectively. In addition, *Nₛ* may be equal to a quantity of antennas in space domain; *N_{f}* may be equal to a quantity of frequency domain resources, where for example, *N_{f}* is equal to a quantity of subbands/resource blocks (resource block, RB)/resource block groups (resource block group, RBG); and *Nₜ* may be equal to a quantity of time domain resources, where for example, *Nₜ* is equal to a quantity of slots (slot)/mini-slots (mini-slot)/symbols (symbol).

Optionally, the basis vector includes the time-domain basis vector ${S}_{s}^{{N}_{s} \times 1}$, the space-domain basis vector *F*^{*N^{f}*×1}, and the frequency-domain basis vector *T*^{*N^{t}*×1}. Optionally, the basis vector may be a basis vector jointly defined in time domain, frequency domain, and space domain. For example, the basis vector may be a vector that is obtained by performing singular value decomposition (singular value decomposition, SVD) on the channel information H and that is used to represent a time domain channel feature, a frequency domain channel feature, and a space domain channel feature. For another example, the basis vector may be a basis vector obtained by performing a Kronecker operation on the time-domain basis vector, the frequency-domain basis vector, and the space-domain basis vector.

In another optional implementation, the basis vector is a Doppler basis vector. The Doppler basis vector is a basis vector obtained by projecting space-frequency coefficients onto a Doppler domain, and the space-frequency coefficients are determined based on a channel feature and a space-frequency basis vector.

For example, channel information H and the basis vector satisfy Formula (3): ${H}^{N \times 1} = {\sum }_{m = 0}^{M - 1} {c}_{m} {V}^{N \times 1}$ (3).

*cₘ* represents coefficients on the Doppler basis vector that correspond to space-frequency coefficients of a time unit, and *V*^{N×1} represents space-frequency coefficients.

In addition, ${d}^{s , f , t} = CD * = \left[{d}_{1}^{s , f},{d}_{2}^{s , f},…,{d}_{N}^{s , f}\right]$ (4).

C represents a set of *cₘ* corresponding to different time units, *d^{s,f,t}* represents a weighting coefficient obtained by projecting a weighting coefficient of the space-frequency basis vector onto the Doppler basis vector, and D* represents a basis vector obtained by projecting the space-frequency coefficients onto the Doppler domain, that is, D* represents the Doppler basis vector.

It can be learned from Formula (3) that the network device may determine, based on a channel feature and a space-frequency vector of a time unit, space-frequency coefficients *cₘ* of the time unit, and may further determine, based on the space-frequency coefficients, a Doppler domain basis vector D* corresponding to the time unit.

Optionally, the basis vector may alternatively be in another form, and can be used to represent the time domain channel feature, the frequency domain channel feature, and the space domain channel feature. This is not limited in embodiments of this application.

Optionally, a Doppler codebook or a time-frequency domain codebook may be an N×N matrix negotiated between the network device and the terminal. The matrix is, for example, a DFT matrix or a wavelet matrix. For example, for a DFT form, a *p*^{th} basis vector in the Doppler codebook satisfies Formula (5): ${D}_{p}^{∗} = {\left[{e}^{- j 2 π \times 0 \times \frac{p}{N}},{e}^{- j 2 π \times 1 \times \frac{p}{N}},…,{e}^{- j 2 π \times \left(N-1\right) \times \frac{p}{N}}\right]}^{T}$ (5)

*p* = 0, ..., *N* - 1, N is a positive integer, and T represents a time unit. Optionally, for a representation form of a p^{th} basis vector in a time-frequency domain basis vector, refer to Formula (5). A representation form of the basis vector is not limited in embodiments of this application.

Optionally, when an entity managing the channel knowledge map is a core network device, the network device in S101 may be a core network device, or may be an access network device. When the entity managing the channel knowledge map is the core network device, and the network device in S101 is the access network device, the method further includes: The access network device requests to obtain the channel knowledge map from the core network device, and correspondingly, the core network device sends, to the access network device, the channel knowledge map managed by the core network device, so that the access network device can perform S101.

Optionally, when the entity managing the channel knowledge map is the access network device, the access network device may directly perform S101.

Optionally, when the entity managing the channel knowledge map is another entity other than the core network device and the access network device, the core network device or the access network device requests to obtain the channel knowledge map from the entity managing the channel knowledge map, so that the core network device or the access network device can perform S101.

S102: The network device sends first indication information, where the first indication information indicates the N rows of basis vectors. Correspondingly, the terminal device receives the first indication information.

The network device indicates, to the terminal device by using the first indication information, the N rows of basis vectors corresponding to the N time units, so that the terminal device obtains the X basis vectors corresponding to each of the N time units.

In an optional implementation, the network device may indicate the N rows of basis vectors to the terminal device in a vector group manner. Specifically, the first indication information may include the vector group, the vector group includes N rows of basis vectors, and each row of the N rows of basis vectors includes X basis vectors. For example, if N is 9 and X is 10, the vector group included in the first indication information is: $\left[\begin{matrix}{w}_{1 , 1} & … & {w}_{1 , 10} \\ … & … & … \\ {w}_{9 , 1} & … & {w}_{9 , 10}\end{matrix}\right]$ (6)

*w*_{1,1}, *... , and w*_{1,10} represent one row of basis vectors corresponding to a 1^{st} time unit, and *w*_{9,1},*..., and w*_{9,10} represent one row of basis vectors corresponding to the 1^{st} time unit.

It can be learned that the network device may indicate, to the terminal device by using the vector group shown in Formula (6), the N rows of basis vectors corresponding to the N time units.

Optionally, the network device may alternatively indicate the N rows of basis vectors to the terminal device in another form. In other words, the first indication information may alternatively be in another form. This is not limited in embodiments of this application.

S103: The network device respectively sends pilot signals in the N time units. Correspondingly, the terminal device respectively receives the pilot signals in the N time units.

The pilot signal may be a CSI-RS, an SSB, a DMRS, or the like. This is not limited in embodiments of this application.

The network device indicates, to the terminal device by performing S102, the N rows of basis vectors corresponding to the N time units. In this case, to enable the terminal device to feed back a plurality of basis vectors in the X basis vectors corresponding to each of the N time units, the network device respectively sends the pilot signals in the N time units.

That the network device respectively sends the pilot signals in the N time units means that the network device sends a pilot signal in each of the N time units. Correspondingly, the terminal device receives the pilot signal in each of the N time units, and measures the received pilot signal

Optionally, before performing S103, the network device further sends measurement configuration information to the terminal device, where the measurement configuration information is for configuring the terminal device to respectively receive the pilot signals in the N time units and measure the received pilot signals.

S104: The terminal device sends second indication information, where the second indication information indicates weighting coefficients of Y basis vectors in the X basis vectors, and the weighting coefficients of the Y basis vectors are determined by the terminal device based on the pilot signals. Correspondingly, the network device receives the second indication information.

Y is an integer greater than 1 and less than or equal to X.

After receiving the pilot signal in each of the N time units, the terminal device measures the received pilot signal, to obtain channel information in the time unit. The terminal device determines, based on the channel information obtained through measurement in each of the N time units and the X basis vectors corresponding to the time unit, the Y basis vectors in the X basis vectors and the weighting coefficients of the Y basis vectors.

For example, when the basis vector is the time-frequency domain basis vector, for each of the N time units, the terminal device may determine, based on the channel information *H*^{N>1} obtained through measurement and the foregoing Formula (2), the Y basis vectors in the X basis vectors corresponding to the time unit and the weighting coefficients *αₘ* of the Y basis vectors.

For another example, when the basis vector is the Doppler basis vector D*, for each of the N time units, it may be learned from the foregoing Formula (3) that the terminal device may determine, based on *H*^{N×1} obtained through measurement and *V*^{N×1}, *cₘ* corresponding to the time unit, where *V*^{N×1} is pre-negotiated between the network device and the terminal device. Then, the terminal device may determine, based on *cₘ* (that is C) corresponding to a plurality of time units and Formula (4), Y Doppler basis vectors in X Doppler basis vectors corresponding to each of the plurality of time units, and weighting coefficients *d^{s,f,t}* of the Y Doppler basis vectors. The weighting coefficients *d^{s,f,t}* of the Y Doppler basis vectors are weighting coefficients obtained by projecting weighting coefficients of space-frequency basis vectors onto Doppler basis vectors.

It should be noted that for each of the N time units, indexes of the Y basis vectors determined by the terminal device are the same as the weighting coefficients of the Y basis vectors determined by the terminal device. Therefore, the weighting coefficients that are of the Y basis vectors and that are indicated by the terminal device to the network device by using the second indication information are applicable to determining of channel information corresponding to the N time units.

In an optional implementation, the second indication information includes the indexes of the Y basis vectors and the weighting coefficients of the Y basis vectors. For example, the N rows of basis vectors delivered by the network device to the terminal device are shown in the foregoing Formula (5), and the basis vectors determined by the terminal device based on the received pilot signals are basis vectors with indexes of 1 to 8 in 10 basis vectors. In this case, the second indication information includes the indexes of 1 to 8 and weighting coefficients, and the weighting coefficients are weighting coefficients of the basis vectors with indexes of 1 to 8. For example, the second indication information includes indexes of *w*_{1,1}, *w*_{1,2}, ..., and *w*_{1,8} in *w*_{1,1}, *w*_{1,2}, ..., and *w*_{1,10} and weighting coefficients of *w*_{1,1}, *w*_{1,2}, ..., and *w*_{1,8}.

Indexes of the X basis vectors corresponding to each of the N time units are delivered by the network device to the terminal device, or are pre-negotiated between the network device and the terminal device. Therefore, a manner in which the second indication information includes the indexes of the Y basis vectors helps the network device determine the Y basis vectors in the X basis vectors based on the indexes of the Y basis vectors.

In another optional implementation, the second indication information includes the weighting coefficients of the Y basis vectors and indexes of the weighting coefficients of the Y basis vectors. Indexes of weighting coefficients of the X basis vectors correspond to the X basis vectors. The indexes of the weighting coefficients of the X basis vectors corresponding to each of the N time units are delivered by the network device to the terminal device, or are pre-negotiated between the network device and the terminal device. Therefore, in a manner in which the second indication information includes the indexes of the weighting coefficients of the Y basis vectors, the network device may determine the Y basis vectors in the X basis vectors based on the indexes of the weighting coefficients of the Y basis vectors.

For example, if indexes of weighting coefficients included in the second indication information are 1 to 6, the second indication information indicates weighting coefficients of basis vectors with indexes of 1 to 6.

Optionally, the weighting coefficients of the Y basis vectors are Y weighting coefficients with largest values in the weighting coefficients of the X basis vectors. Y is configured by the network device, or is pre-negotiated between the network device and the terminal device.

For example, the N time units are N slots, and each of the N slots corresponds to 10 basis vectors. The terminal device receives a pilot signal in an n^{th} slot, and measures the received pilot signal, to obtain channel information of the n^{th} slot. The terminal device determines, based on the channel information of the n^{th} slot obtained through measurement and 10 basis vectors corresponding to the n^{th} slot, a weighting coefficient of each of the 10 basis vectors, and feeds back Y weighting coefficients with largest values in 10 weighting coefficients to the network device. n is a positive integer less than N.

S105: The network device determines, based on the weighting coefficients of the Y basis vectors and the N rows of basis vectors, channel state information corresponding to M time units.

M is an integer greater than N, and the M time units include the N time units.

Optionally, that the network device determines, based on the weighting coefficients of the Y basis vectors and the N rows of basis vectors, the CSI corresponding to the M time units includes: The network device determines, based on the weighting coefficients of the Y basis vectors and M rows of basis vectors, the CSI corresponding to the M time units. The M rows of basis vectors are basis vectors respectively corresponding to the M time units, and each row of the M rows of basis vectors includes X basis vectors. The M rows of basis vectors are determined by the network device based on the mobility state information of the terminal device and the channel knowledge map, and the M rows of basis vectors include the N rows of basis vectors. For a manner of determining the M rows of basis vectors, refer to S101. Details are not described again.

Specifically, for an m^{th} row of basis vectors in the M rows of basis vectors, the network device determines, based on the indexes of the Y basis vectors or the indexes of the weighting coefficients of the Y basis vectors that are indicated by the second indication information, Y basis vectors in X basis vectors in the m^{th} row of basis vectors, and then determines, based on the Y basis vectors and Y weighting coefficients indicated by the second indication information, CSI corresponding to an m^{th} time unit. m is a positive integer less than or equal to M.

It can be learned that the network device determines, based on CSI information fed back by the terminal device in the N time units in the M time units and the M rows of basis vectors, CSI corresponding to each of the M time units. The M rows of basis vectors are determined by the network device based on prior information provided by the channel knowledge map and the mobility state information of the terminal device, so that channel time variation is reconstructed more accurately, and determined CSI is more accurate, thereby improving transmission performance.

In this embodiment of this application, the N rows of basis vectors that correspond to N time and that are indicated by the network device to the terminal device are determined based on the mobility state information of the terminal device and the channel knowledge map, thereby allowing the N rows of basis vectors to represent channel time variation during movement of the terminal device. Accordingly, the network device determines, based on the weighting coefficients of the Y basis vectors fed back by the terminal device in the N time units and the N rows of basis vectors, the CSI respectively corresponding to the M time units, so that CSI accuracy can be improved, thereby improving transmission performance.

In addition, the N time units are a part of the M time units. The network device determines, based on the weighting coefficients of the Y basis vectors fed back by the terminal device in the N time units and the N rows of basis vectors, the CSI respectively corresponding to the M time units, so that signaling overheads can be reduced.

The following uses an example in which M=64, N=9, X=10, and Y=8 to describe the channel state information determining method 100.

FIG. 11 is a diagram of terminal device movement. As shown in FIG. 11, a terminal device moves from a position A to a position B based on a moving direction indicated by an arrow. In addition, movement of the terminal device from the position A to the position B corresponds to 64 time units, which are denoted as t1 to t64. Alternatively, a network device may divide, based on movement position information of the terminal device, movement of a terminal device into 64 time units, which are denoted as t1 to t64.

The network device determines, based on the movement position information of the terminal device and a channel knowledge map, one row of basis vectors corresponding to each of the time units t1 to t9 in a process in which the terminal device moves from the position A to the position B. Each row of basis vectors includes 10 basis vectors. As shown in FIG. 11, one row of basis vectors corresponding to t1 is [*w*_{1,1}, ..., *w*_{1,10}]. Similarly, one row of basis vectors corresponding to t2 is [*w*_{2,1}, ..., *w*_{2,10}]. In addition, a representation manner of one row of basis vectors corresponding to each of the time units t3 to t9 is similar to this. Details are not described again.

Optionally, the terminal device further determines, based on the movement position information of the terminal device and the channel knowledge map, one row of basis vectors corresponding to each of the time units t10 to t64. A representation manner of one row of basis vectors corresponding to each of the time units t10 to t64 is similar to the representation manner of one row of basis vectors corresponding to t1. For example, one row of basis vectors corresponding to t64 is [*w*_{64,1}, ..., *w*_{64,10}]. Therefore, 64 rows of basis vectors that are determined by the network device and that correspond to t1 to t64 during movement of the terminal device are shown in FIG. 11. Each of the 64 rows of basis vectors corresponding to t1 to t64 may be a time-frequency-space basis vector, or may be a Doppler basis vector. For implementations of the time-frequency-space basis vector and the Doppler basis vector, refer to descriptions in the channel state information determining method 100. Details are not described again.

In addition, one row of basis vectors corresponding to each of the time units t1 to t64 is used to represent channel variation in the time unit. For example, [*w*_{1,1}, ..., *w*_{1,10}] corresponding to t1 is used to represent channel variation in t1. For another example, [*w*_{64,1}, ..., *w*_{64,10}] corresponding to t64 is used to represent channel variation in t64.

The network device indicates, to the terminal device by using first indication information, nine rows of basis vectors corresponding to t1 to t9. Each row of basis vectors includes 10 basis vectors. As shown in FIG. 11, the nine rows of basis vectors that are indicated by the first indication information and that correspond to t1 to t9 are basis vectors in a dashed box in FIG. 11.

The network device respectively sends pilot signals in t1 to t9. Correspondingly, the terminal device respectively receives the pilot signals in t1 to t9, and measures the received pilot signals, to obtain channel information. The terminal device determines, based on channel information obtained through measurement in each of the time units t1 to t9 and 10 basis vectors corresponding to the time unit, weighting coefficients of the 10 basis vectors corresponding to the time unit, and feeds back weighting coefficients of a part or all of the 10 basis vectors.

For example, the terminal device determines, based on channel information *h*1 obtained through measurement in t1 and [*w*_{1,1}, ..., *w*_{1,10}], weighting coefficients [*c*₁, ..., *c*₁₀] of [*w*_{1,1}, ..., *w*_{1,10}]. For another example, the terminal device determines, based on channel information *h*2 obtained through measurement in t2 and [*w*_{2,1}, ..., *w*_{2,10}], weighting coefficients [*c*₁, ..., *c*₁₀] of [*w*_{2,1}, ..., *w*_{2,10}]. In t3 to t9, a manner in which the terminal device determines the weighting coefficients of the 10 basis vectors corresponding to each time unit is the same. Details are not described again.

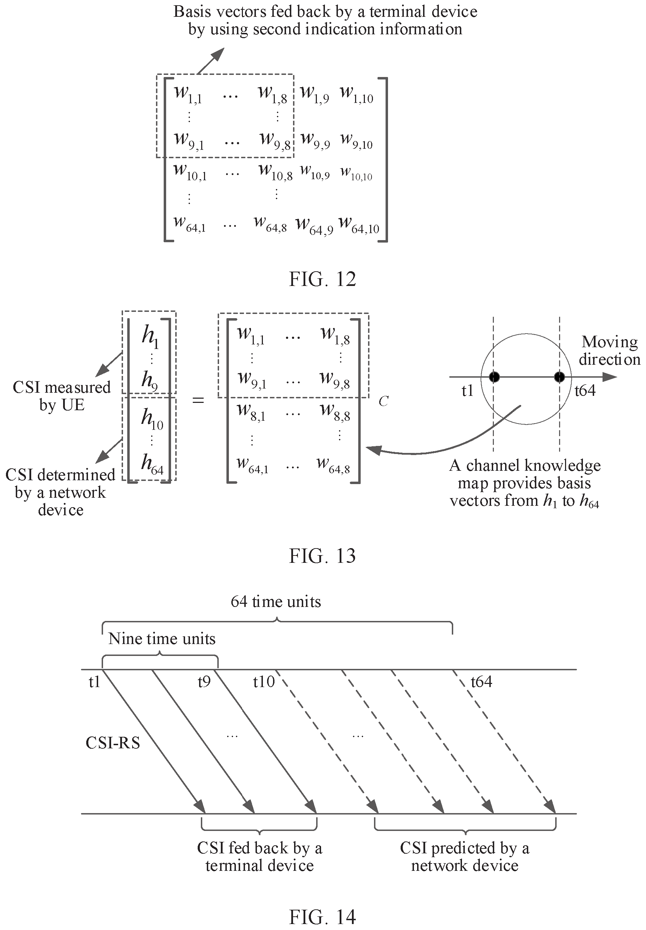

For example, if the network device configures the terminal device to feed back weighting coefficients of eight of the 10 basis vectors, the terminal device determines, based on the channel information obtained through measurement in each time unit and the 10 basis vectors corresponding to the time unit, 10 weighting coefficients corresponding to the 10 basis vectors, determines eight weighting coefficients with largest values in the 10 weighting coefficients, and feeds back the eight weighting coefficients with largest values to the network device. For example, if the terminal device determines that weighting coefficients of eight basis vectors with indexes of 1 to 8 are eight weighting coefficients with largest values, the terminal device feeds back the weighting coefficients of the basis vectors with indexes of 1 to 8 to the network device. In other words, the terminal device sends second indication information to the network device, where the second indication information indicates the weighting coefficients of the basis vectors with indexes of 1 to 8. FIG. 12 is a diagram of basis vectors. As shown in FIG. 12, a terminal device feeds back, by using second indication information, weighting coefficients of eight basis vectors with indexes of 1 to 8 in each row of basis vectors from t1 to t9 in FIG. 12. For example, for t1, the terminal device feeds back weighting coefficients [*c*₁, ..., *c*₈] of [*w*_{1,1}, ..., *w*_{1,8}] by using the second indication information. For another example, for t9, the terminal device feeds back weighting coefficients [*c*₁, ..., *c*₈] of [*w*_{9,1}, ..., *w*_{9,10}] by using the second indication information.

Therefore, a network device determines, based on the second indication information, CSI respectively corresponding to t1 to t64. Specifically, for CSI corresponding to each time unit, the network device determines, based on basis vectors with indexes of 1 to 8 and weighting coefficients C that correspond to the time unit, the CSI corresponding to the time unit. FIG. 13 is a diagram for determining CSI, where C=[*c*₁, ..., *c*₈]. As shown in FIG. 13, for t1, corresponding channel information *h*1*=*[*w*_{1,1}*,* ..., *w*_{1,8}]C. For t9, corresponding channel information *h*9=[*w*_{9,1}, ..., *w*_{9,8} ]C. For t10, corresponding channel information *h*10=[ *w*_{10,1} , ..., *w*_{10,8} ]C. For t64, corresponding channel information *h*64=[ *w*_{64,1} , ..., *w*_{64,8} ]C. In addition, CSI respectively corresponding to t2 to t8 and CSI respectively corresponding to t11 to t63 are determined in a similar manner. Details are not described again.

A network device determines CSI respectively corresponding to t1 to t9 based on measurement and feedback of pilot signals received by a terminal device in t1 to t9. Therefore, the CSI that is determined by the network device and that respectively corresponds to t1 to t9 may be understood as being obtained by the network device through measurement. The network device determines CSI respectively corresponding to t10 to t64 based on index feedback of basis vectors by the terminal device in t1 to t9. Therefore, the CSI that is determined by the network device and that respectively corresponds to t1 to t9 may be understood as CSI predicted by the network device. For example, FIG. 14 is another diagram for determining CSI. As shown in FIG. 14, CSI respectively corresponding to t1 to t9 is CSI fed back by a terminal device based on a CSI-RS, and CSI respectively corresponding to t10 to t64 is CSI predicted by a network device.

It can be learned that the network device determines, based on mobility state information of the terminal device and a channel knowledge map, 64 rows of basis vectors respectively corresponding to t1 to t64 during movement of the terminal device. Each row of basis vectors includes 10 basis vectors. The network device sends, to the terminal device, nine rows of basis vectors respectively corresponding to t1 to t9, and respectively sends pilot signals in t1 to t9. Therefore, the terminal device performs measurement based on the pilot signals received in t1 to t9, to obtain channel information respectively corresponding to t1 to t9, and feeds back the channel information by using weighting coefficients of basis vectors with indexes of 0 to 8 in the 10 basis vectors. Further, for each of the time units t1 to t64, the network device determines, based on basis vectors with indexes of 0 to 8 in basis vectors corresponding to the time unit and a weighting coefficient fed back by the terminal device, CSI corresponding to the time unit.

Nine rows of basis vectors that are sent by the network device to the terminal device and that correspond to t1 to t9 are determined based on the mobility state information of the terminal device and the channel knowledge map, thereby allowing basis vectors corresponding to each of the time units t1 to t9 to represent channel time variation during movement of the terminal device. Accordingly, the network device determines, based on the weighting coefficients of the basis vectors with indexes of 0 to 8 and that are fed back by the terminal device in t1 to t9 and the nine rows of basis vectors corresponding to t1 to t9, CSI respectively corresponding to t1 to t64, so that CSI accuracy can be improved, thereby improving transmission performance.

For the technical solutions described above, the following further describes corresponding apparatus implementation solutions.

It may be understood that, to implement the functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

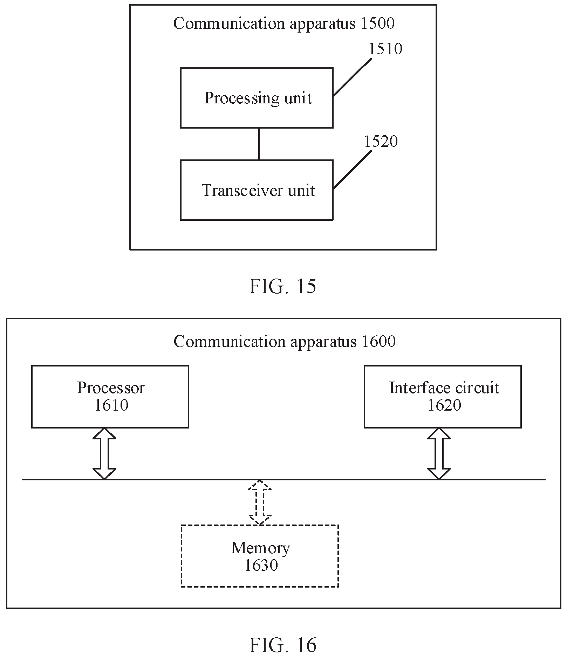

FIG. 15 and FIG. 16 are diagrams of structures of possible communication apparatuses according to embodiments of this application. These communication apparatuses may be configured to implement functions of the network device or the terminal device in the foregoing method embodiments, and therefore can also implement beneficial effects of the foregoing method embodiments. In embodiments of this application, the communication apparatus may be the terminal device 120 shown in FIG. 1, or may be the base station 110a shown in FIG. 1, or may be a module (for example, a chip) used in the terminal device or the base station.

As shown in FIG. 15, a communication apparatus 1500 includes a processing unit 1510 and a transceiver unit 1520. The communication apparatus 1500 is configured to implement the function of the network device or the terminal device in the method embodiment shown in FIG. 10.

When the communication apparatus 1500 is configured to implement the function of the network device in the method embodiment shown in FIG. 10,
the processing unit 1510 is configured to determine, based on mobility state information of a terminal device and a channel knowledge map, N rows of basis vectors corresponding to N time units, where each row of the N rows of basis vectors includes X basis vectors, and the channel knowledge map indicates a region-based channel feature; and
the transceiver unit 1520 is configured to send first indication information, where the first indication information indicates the N rows of basis vectors;
the transceiver unit 1520 is further configured to respectively send pilot signals in the N time units;
the transceiver unit 1520 is further configured to receive second indication information, where the second indication information indicates weighting coefficients of Y basis vectors in the X basis vectors, and the weighting coefficients of the Y basis vectors are determined based on the pilot signal;
the processing unit 1510 is further configured to determine, based on the weighting coefficients of the Y basis vectors and the N rows of basis vectors, channel state information corresponding to M time units, where the M time units include the N time units; and
N is a positive integer, M is an integer greater than N, X is an integer greater than 1, and Y is an integer greater than 1 and less than or equal to X.

When the communication apparatus 1500 is configured to implement the function of the terminal device in the method embodiment shown in FIG. 10,
the transceiver unit 1520 is configured to receive first indication information, where the first indication information indicates N rows of basis vectors; and
the transceiver unit 1520 is further configured to respectively receive pilot signals in the N time units; and
the transceiver unit 1520 is further configured to send second indication information, where the second indication information indicates weighting coefficients of Y basis vectors in X basis vectors, and the weighting coefficients of the Y basis vectors are determined based on the pilot signal.

For more detailed descriptions of the processing unit 1510 and the transceiver unit 1520, refer to related descriptions in the method embodiment shown in FIG. 10.

As shown in FIG. 16, a communication apparatus 1600 includes a processor 1610 and an interface circuit 1620. The processor 1610 and the interface circuit 1620 are coupled to each other. It may be understood that the interface circuit 1620 may be a transceiver or an input/output interface. Optionally, the communication apparatus 1600 may further include a memory 1630, configured to: store instructions executed by the processor 1610, store input data needed by the processor 1610 to run the instructions, or store data generated after the processor 1610 runs the instructions. Sometimes, the interface circuit 1620 may alternatively be understood as a part of the processor 1610. In this case, the communication apparatus 1600 includes the processor 1610.

When the communication apparatus 1600 is configured to implement the method shown in FIG. 10, the processor 1610 is configured to implement the function of the processing unit 1510, and the interface circuit 1620 is configured to implement the function of the transceiver unit 1520.

When the communication apparatus is a chip used in a network device, the chip in the network device implements a function of the network device in the foregoing method embodiments. The chip in the network device receives information from a terminal device may be understood as that the information is first received by another module (for example, a radio frequency module or an antenna) in the network device, and then sent by the module to the chip in the network device. The chip in the network device sends information to the terminal device may be understood as that the information is delivered to another module (for example, a radio frequency module or an antenna) in the network device, and then sent by the module to the terminal device.

When the communication apparatus is a chip used in a terminal device, the chip in the terminal device implements a function of the terminal device in the foregoing method embodiments. The chip in the terminal device receives information from a network device may be understood as that the information is first received by another module (for example, a radio frequency module or an antenna) in the terminal device, and then sent by the module to the chip in the terminal device. The chip in the terminal device sends information to the network device may be understood as that the information is first sent to another module (for example, a radio frequency module or an antenna) in the terminal device, and then sent by the module to the network device.

An embodiment of this application further provides a communication system. The system may include a terminal device and a network device. In another possible design, the system may further include another device/function network element that interacts with the terminal device and the network device.

An embodiment of this application further provides a computer-readable storage medium, configured to store computer software instructions. When the instructions are executed by a communication apparatus, a function of any one of the foregoing method embodiments is implemented.

An embodiment of this application further provides a computer program product, configured to store computer software instructions. When the instructions are executed by a communication apparatus, a function of any one of the foregoing method embodiments is implemented.

An embodiment of this application further provides a computer program. When the computer program is run on a computer, a function of any one of the foregoing method embodiments is implemented.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entities A and B herein may be network devices or terminal devices, or may be modules in the network devices or the terminal devices. Information sending and receiving may be information exchange between the network device and the terminal device, for example, information exchange between a base station and a terminal device. Information sending and receiving may alternatively be information exchange between two network devices, for example, information exchange between a CU and a DU. Information sending and receiving may alternatively be information exchange between different modules in an apparatus, for example, information exchange between a chip in a terminal device and another module in the terminal device, or information exchange between a chip in a network device and another module in the network device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory (read-only memory, ROM), a programmable read-only memory, an erasable programmable read-only memory, an electrically erasable programmable read-only memory, a register, a hard disk drive, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal device. Alternatively, the processor and the storage medium may exist in a network device or a terminal device as discrete components.

All or a part of the foregoing embodiments may be implemented by using software, hardware, firmware, or any combination thereof. When software is used to implement the embodiments, all or a part of the embodiments may be implemented in the form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile storage medium or a non-volatile storage medium, or may include both a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined to form a new embodiment based on an internal logical relationship of different embodiments.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A channel state information determining method, wherein the method comprises:
determining, based on mobility state information of a terminal device and a channel knowledge map, N rows of basis vectors corresponding to N time units, wherein each row of the N rows of basis vectors comprises X basis vectors, and the channel knowledge map indicates a region-based channel feature;
sending first indication information, wherein the first indication information indicates the N rows of basis vectors;
sending a pilot signal in each of the N time units;
receiving second indication information, wherein the second indication information indicates weighting coefficients of Y basis vectors among the X basis vectors, and the weighting coefficients of the Y basis vectors are determined based on the pilot signal; and
determining, based on the weighting coefficients of the Y basis vectors and the N rows of basis vectors, channel state information corresponding to M time units, wherein the M time units comprise the N time units, wherein
N is a positive integer, M is an integer greater than N, X is an integer greater than 1, and Y is an integer greater than 1 and less than or equal to X.

2. The method according to claim 1, wherein
the basis vector is a time-frequency-space basis vector; and
the time-frequency-space basis vector comprises a time-domain basis vector, a frequency-domain basis vector, and a space-domain basis vector, or the time-frequency-space basis vector is a joint basis vector in a time domain, a frequency domain, and a space domain.

3. The method according to claim 1, wherein
the basis vector is a Doppler basis vector; and
the Doppler basis vector is a basis vector obtained by projecting space-frequency coefficients onto a Doppler domain, and the space-frequency coefficients are determined based on a channel feature and a space-frequency basis vector.

4. The method according to claim 3, wherein
the weighting coefficients of the Y basis vectors are weighting coefficients of space-frequency basis vectors under projection by a Doppler basis vector.

5. The method according to any one of claims 1 to 4, wherein
the second indication information comprises indexes of the Y basis vectors and the weighting coefficients of the Y basis vectors; or
the second indication information comprises the weighting coefficients of the Y basis vectors and indexes of the weighting coefficients of the Y basis vectors.

6. The method according to any one of claims 1 to 5, wherein
the weighting coefficients of the Y basis vectors are Y weighting coefficients with largest values in weighting coefficients of the X basis vectors.

7. The method according to claim 6, wherein Y is configured by a network device, or Y is pre-negotiated between the network device and the terminal device.

8. The method according to any one of claims 1 to 7, wherein before the determining, based on the mobility state information of the terminal device and the channel knowledge map, the N rows of basis vectors corresponding to the N time units, the method further comprises:
receiving the mobility state information of the terminal device, wherein the mobility state information comprises one or more of the following: a moving speed, a moving direction, and position region information.

9. A communication apparatus, wherein the communication apparatus comprises a module configured to perform the method according to any one of claims 1 to 8.

10. A communication apparatus, wherein the communication apparatus comprises a processor, and the processor is configured to perform the method according to any one of claims 1 to 8.

11. A chip, comprising a processor, wherein the processor invokes a computer program stored in a memory, to cause a communication apparatus comprising the chip to implement the method according to any one of claims 1 to 8.

12. A computer-readable storage medium, wherein the computer-readable storage medium is configured to store instructions, and when the instructions are run on a computer, the method according to any one of claims 1 to 8 is performed.

13. A computer program product comprising instructions, wherein when the computer program product runs on a computer, the method according to any one of claims 1 to 8 is performed.
